# EUROPÄISCHE PATENTANMELDUNG

(11) **EP 1 384 540 A1**
(43) Veröffentlichungstag der Anmeldung: **28.01.2004**
(21) Anmeldenummer: 03102106.6
(22) Anmeldetag: 11.07.2003
(51) Int. Cl.: B23B 51/04, B23B 31/107

(54) **Werkzeugaufnahme für eine Kernbohrkrone**

(30) Priorität: 23.07.2002 DE 10233365
(71) Anmelder: HILTI Aktiengesellschaft, 9494 Schaan (LI)
(72) Erfinder: Ostermeier, Peter, 86911, Diessen (DE)
(74) Vertreter: Wildi, Roland

(57) **Zusammenfassung**

Eine Werkzeugaufnahme (3) mit einer maschinell drehend angetriebenen Arbeitsspindel (4), welche einen Gewindestutzen (5) und einen Axialanschlagflansch (6) ausbildet, dem werkzeugseitig ein eine Axialflanschfläche (8) ausbildendes Anschlagmittel (7) zugeordnet ist, wobei das Anschlagmittel (7) durch begrenzt bewegliche Klemmkeile (9) axial druckverspannbar ist und die Klemmkeile (9) über ein handbetätigbares, versetzbares Entarretiermittel (10) aus dieser Druckverspannung versetzbar sind, wobei, zur wechselbaren Aufnahme einer Kernbohrkrone (1) mit Innengewinde (2), das Anschlagmittel (7) mit dem Axialanschlagflansch (6) begrenzt axial beweglich verbunden und gegen diesen axial druckverspannbar ist.

## Beschreibung

Die Erfindung bezeichnet eine maschinengetriebene drehende Werkzeugaufnahme für eine Kernbohrkrone zum vorzugsweisen Bearbeiten von spröden Materialien wie Gestein, Beton oder Mauerwerk.

Bei der Bearbeitung von spröden Materialien durch eine drehende Kernbohrkrone mit einem stirnseitig mit Schleif- oder Schneidkörpern aus Hartstoff besetzten Zylinderrohr von üblicherweise mehr als 100 mm Durchmesser sind über das am anderen, maschinenseitigen Ende koaxial angeordnete Aufnahmeende mit einem Durchmesser von üblicherweise weniger als 50 mm, bspw. einem 1 1/4 Zoll Innengewinde, hohe Drehmomente und Axialkräfte von der Werkzeugaufnahme zu übertragen.

Bei einfachen Werkzeugaufnahmen mit einer, einen Gewindestutzen und einen Axialanschlagflansch ausbildenden, drehend angetriebenen Arbeitsspindel, auf welche sich im weiteren beschränkt wird, führen die hohen Drehmomente und Axialkräfte zu einem haftreibschlüssigen Verklemmen des Aufnahmeendes in der Werkzeugaufnahme, wodurch ein Wechsel der Kernbohrkrone üblicherweise nur umständlich und zeitaufwendig mit Montagewerkzeug möglich ist. Trotz dieser Nachteile sind für derartige Werkzeugaufnahmen ausgebildete Kernbohrkronen im Markt weit verbreitet.

Nach der US4911253, der EP235581 sowie der DE29918965U1 weist die maschinengetriebene Werkzeugaufnahme für eine Kernbohrkrone / Kernbohrkronenadapter einen Gewindestutzen und einen Axialanschlagflansch auf. Zum Lösen der haftreibschlüssig zwischen dem Axialanschlagflansch und dem Gewindestutzen der Werkzeugaufnahme verklemmten Kernbohrkrone / Kernbohrkronenadapters ist ein zum Sechskant des Aufnahmeendes passender Schlüssel notwendig. Die in der DE29918965U1 vorgeschlagene Schnellkupplung zum werkzeuglosem Wechsel der Kernbohrkrone ist bei Werkzeugaufnahmen mit einem Gewindestutzen nicht verwendbar.

Zudem weist nach der DE3824040C1 eine als Spannmutter ausgebildete Spannvorrichtung für ein zwischen dieser und einem Axialanschlagflansch eines drehend angetriebenen Gewindestutzens montierbaren Werkzeugs ein werkzeugseitig dem Axialanschlagflansch zugeordnetes, axial begrenzt bewegliches, eine Axialflanschfläche ausbildendes, Anschlagmittel auf, welches durch begrenzt bewegliche, Klemmkeile gegen die Spannmutter axial druckverspannbar ist, wobei die Klemmkeile über ein handbetätigbares, versetzbares Entarretiermittel aus dieser Druckverspannung lösbar versetzbar sind. Diese für scheibenförmige Werkzeuge ausgebildete Spannvorrichtung ist für Kernbohrkronen mit einem Innengewinde zur Montage nicht anwendbar. Jedoch dient der Offenbarungsgehalt dieser Druckschrift dem Fachmann zum tieferen Verständnis des axialen Spannprinzips der Werkzeugaufnahme.

Die Aufgabe der Erfindung besteht in der Realisierung einer Werkzeugaufnahme mit einem Gewindestutzen und einen Axialanschlagflansch, welche einen werkzeuglosen Wechsel einer Kernbohrkrone mit Innengewinde ermöglicht.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine, für eine Kernbohrkrone mit Innengewinde ausgebildete, Werkzeugaufnahme mit einer, einen Gewindestutzen und einen Axialanschlagflansch ausbildenden, drehend angetriebenen Arbeitsspindel ein werkzeugseitig dem Axialanschlagflansch zugeordnetes, mit diesem axial begrenzt beweglich verbundenes, eine Axialflanschfläche ausbildendes, Anschlagmittel auf, welches durch begrenzt bewegliche, Klemmkeile gegen den Axialanschlagflansch axial druckverspannbar ist, wobei die Klemmkeile über ein handbetätigbares versetzbares Entarretiermittel aus dieser Druckverspannung lösbar versetzbar sind.

Durch das zum Axialanschlagflansch lösbar druckverspannbare, axial begrenzt bewegliche Anschlagmittel ist eine übliche Kernbohrkrone mit einem zum Gewindestutzen passenden Innengewinde als Aufnahmeende werkzeuglos wechselbar, indem die durch das handbetätigbare versetzbare Entarretiermittel freigegebenen Klemmkeile durch Hangabtriebskräfte wegwandern und somit die Druckverspannung mindern, wodurch das mit dem Aufnahmeende der Kernbohrkrone haftreibschlüssig verklemmte Anschlagmittel maschinenseitig ausweichen kann und die Verklemmung somit gelöst wird. Mit einer derartigen Werkzeugaufnahme sind die ansonsten nur mit Montagewerkzeug wechselbaren Kernbohrkronen mit Innengewinde werkzeuglos wechselbar.

Vorteilhaft sind die Klemmkeile nach radial innen kreiskeilförmig verjüngt ausgebildet, wodurch eine axiale Druckverspannung mit einer radialen Versetzung der Klemmkeile erzielbar ist.

Vorteilhaft ist das versetzbare Entarretiermittel als von aussen zugänglicher, händisch drehversetzbar betätigbarer Arretierungsring ausgebildet, welcher den Klemmkeilen jeweils zugeordnete Führungskonturen ausbildet, die in zumindest zwei verschiedenen Positionen des versetzbaren Entarretiermittels verschieden zu den Klemmkeilen beabstandet sind, wodurch die Arretierung / Entarretierung durch eine begrenzte Drehversetzung ermöglicht wird.

Vorteilhaft sind zwischen dem Entarretiermittel und den Klemmkeilen bewegliche Arretierungskörper angeordnet, weiter vorteilhaft Kugeln, Kegeln oder Walzen, wodurch zwischen den Klemmkeilen und dem Entarretiermittel die Arretierung / Entarretierung verschleissarm vermittelbar ist.

Vorteilhaft sind die Arretierungskörper mit Federmitteln federnd vorgespannt, welche mittelbar über die Klemmkeile das Anschlagmittel bezüglich des Axialanschlagflansches selbsttätig axial austreiben, wodurch nach dem Lösen der Kernbohrkrone durch das Entarretiermittel das Anschlagmittel selbsttätig in die maximal axial aufgetriebene werkzeugseitige Arretierungsposition bewegbar ist sowie eine bei dynamischer Beanspruchung gegen ein selbsttätiges Lösen sichere Arretierung realisierbar ist.

Vorteilhaft ist die axiale Beweglichkeit des Anschlagmittels werkzeugseitig durch einen auf der Arbeitsspindel fixierten Sprengring begrenzt, wodurch die Werkzeugaufnahme einfach montierbar ist.

Vorteilhaft ist das Anschlagmittel als ein biegesteifer Anschlagring mit einer werkzeugseitigen Axialflanschfläche und einer maschinenseitigen, sich nach radial innen verdickenden, Kreiskeilfläche ausgebildet, wodurch eine weitgehend gleichmässige Flanschkontaktbeanspruchung realisierbar ist.

Vorteilhaft bildet der Axialanschlagflansch werkzeugseitig eine sich nach radial innen verdickende Kreiskeilfläche auf, wodurch der Keilwinkel vergrössert wird, so dass eine durch Haftreibungskräfte möglicherweise verursachte Selbsthemmung der Klemmkeile vermieden wird.

Vorteilhaft sind jeweils zwischen dem Axialanschlagflansch, dem Entarretiermittel und dem Anschlagmittel in jeweils zugeordneten Dichtrillen kreisringförmige Dichtringe, vorzugsweise O-Ringe, dichtend angeordnet, welche insbesondere die versetzbaren Klemmkeile vor Verschmutzung schützen.

Die Erfindung wird bezüglich eines vorteilhaften Ausführungsbeispiels näher erläutert mit:
Fig. 1 als Längsschnitt durch eine Werkzeugaufnahme
Fig. 2 als Querschnitt durch eine Werkzeugaufnahme

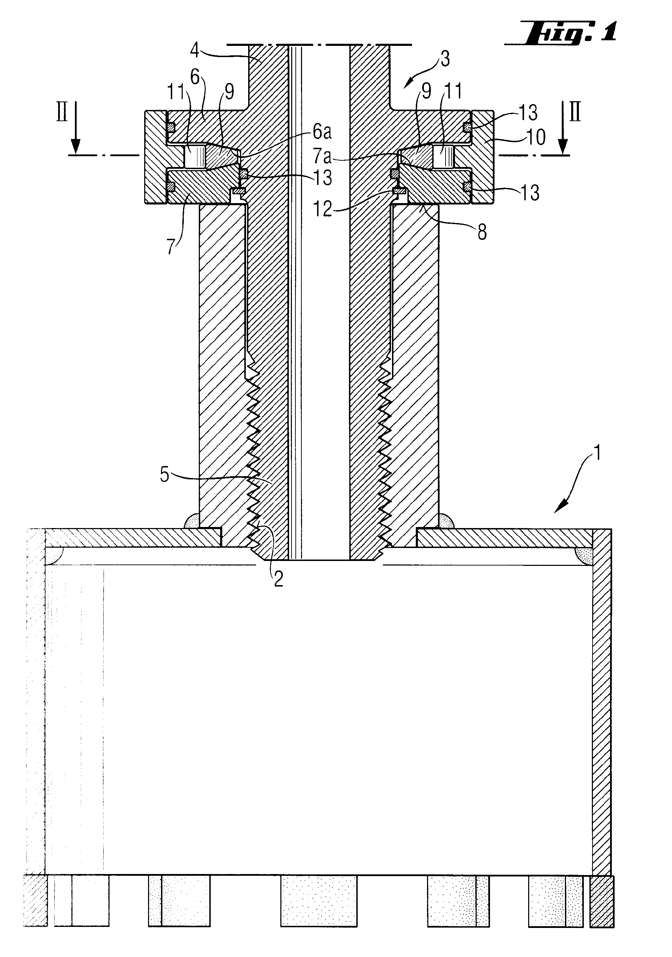

Nach Fig. 1 weist eine, für eine übliche Kernbohrkrone 1 mit Innengewinde 2 im Aufnahmeende ausgebildete, Werkzeugaufnahme 3 eine drehend angetriebene Arbeitsspindel 4 auf. Die Arbeitsspindel 4 bildet einen Gewindestutzen 5 und einen Axialanschlagflansch 6 aus, welcher werkzeugseitig eine sich nach radial innen verdickende Kreiskeilfläche 6a aufweist. Ein werkzeugseitig dem Axialanschlagflansch 6 zugeordnetes, mit diesem axial begrenzt beweglich verbundenes, Anschlagmittel 7 bildet werkzeugseitig eine Axialflanschfläche 8 und maschinenseitig eine sich nach radial innen verdickende Kreiskeilfläche 7a aus. Das als biegesteifer Anschlagring ausgeführte Anschlagmittel 7 ist durch drei begrenzt bewegliche, nach radial innen kreiskeilförmig verjüngt ausgebildet Klemmkeile 9 gegen den Axialanschlagflansch 6 axial druckverspannbar. Die Klemmkeile 9 sind über ein handbetätigbares, als ein von aussen zugänglicher drehversetzbarer Arretierungsring ausgebildetes, Entarretiermittel 10 aus dieser Druckverspannung nach radial aussen lösbar versetzbar. Zwischen dem Entarretiermittel 10 und den Klemmkeilen 9 sind drei radial bewegliche Arretierungskörper 11 in Form von Walzen angeordnet. Die axiale Beweglichkeit des Anschlagmittels 7 ist werkzeugseitig durch einen auf der Arbeitsspindel 4 fixierten Sprengring 12 begrenzt. Jeweils zwischen dem Axialanschlagflansch 6, dem Entarretiermittel 10 und dem Anschlagmittel 7 sind in jeweils zugeordneten Dichtrillen O-Ringe als kreisringförmige Dichtringe 13 dichtend angeordnet.

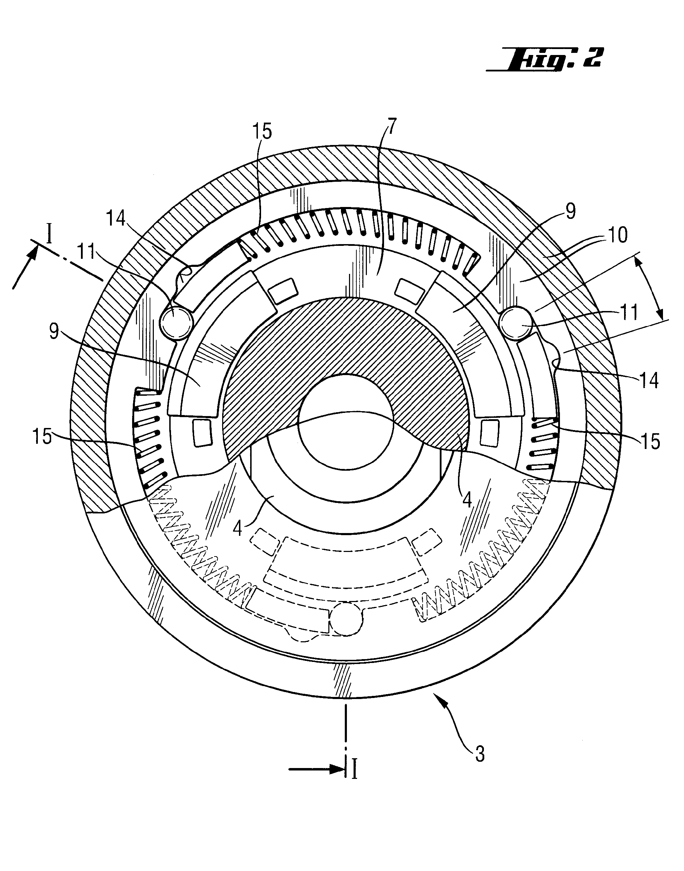

Nach Fig. 2 bildet das drehversetzbare Entarretiermittel 10 den Klemmkeilen 9 jeweils zugeordnete Führungskonturen 14 aus, die in zwei verschiedenen Positionen des drehversetzbaren Entarretiermittels 10 radial verschieden zu den Klemmkeilen 9 beabstandet sind. Die Arretierungskörper 11 sind mit Federmitteln 15 federnd vorgespannt, welche vermittelt über Führungskonturen 14 die Klemmkeile 9 selbsttätig nach radial innen drücken.

## Patentansprüche

1. Werkzeugaufnahme mit einer maschinell drehend angetriebenen Arbeitsspindel (4), welche einen Gewindestutzen (5) und einen Axialanschlagflansch (6) ausbildet, dem werkzeugseitig ein eine Axialflanschfläche (8) ausbildendes Anschlagmittel (7) zugeordnet ist, wobei das Anschlagmittel (7) durch begrenzt bewegliche Klemmkeile (9) axial druckverspannbar ist und die Klemmkeile (9) über ein handbetätigbares, versetzbares Entarretiermittel (10) aus dieser Druckverspannung versetzbar sind, **dadurch gekennzeichnet, dass**, zur wechselbaren Aufnahme einer Kernbohrkrone (1) mit Innengewinde (2), das Anschlagmittel (7) mit dem Axialanschlagflansch (6) begrenzt axial beweglich verbunden und gegen diesen axial druckverspannbar ist.

2. Werkzeugaufnahme nach Anspruch 1, **dadurch gekennzeichnet, dass** die Klemmkeile (9) nach radial innen kreiskeilförmig verjüngt ausgebildet sind.

3. Werkzeugaufnahme nach Anspruch 1 oder 2, **dadurch gekennzeichnet, dass** das versetzbare Entarretiermittel (10) als von aussen zugänglicher, drehbetätigbarer Arretierungsring ausgebildet ist, welcher den Klemmkeilen (9) jeweils zugeordnete Führungskonturen (14) ausbildet, die in zumindest zwei Positionen des versetzbaren Entarretiermittels (10) verschieden zu den Klemmkeilen (9) beabstandet sind.

4. Werkzeugaufnahme nach einem der Ansprüche 1 bis 3, **dadurch gekennzeichnet, dass** zwischen dem Entarretiermittel (10) und den Klemmkeilen (9) bewegliche Arretierungskörper (11) angeordnet sind.

5. Werkzeugaufnahme nach Anspruch 4, **dadurch gekennzeichnet, dass** die Arretierungskörper (11) mit Federmitteln (15) federnd vorgespannt sind, welche mittelbar über die Klemmkeile (9) das Anschlagmittel (7) bezüglich des Axialanschlagflansches (6) selbsttätig axial austreiben.

6. Werkzeugaufnahme nach einem der Ansprüche 1 bis 5, **dadurch gekennzeichnet, dass** die axiale Beweglichkeit des Anschlagmittels (7) werkzeugseitig durch einen auf der Arbeitsspindel (4) fixierten Sprengring (12) begrenzt ist.

7. Werkzeugaufnahme nach einem der Ansprüche 1 bis 6, **dadurch gekennzeichnet, dass** das Anschlagmittel (7) als ein biegesteifer Anschlagring mit einer werkzeugseitigen Axialflanschfläche (8) und einer maschinenseitigen, sich nach radial innen verdickenden, Kreiskeilfläche ausgebildet ist.

8. Werkzeugaufnahme nach einem der Ansprüche 1 bis 7, **dadurch gekennzeichnet, dass** der Axialanschlagflansch (6) werkzeugseitig eine sich nach radial innen verdickende Kreiskeilfläche ausbildet.

9. Werkzeugaufnahme nach einem der Ansprüche 1 bis 8, **dadurch gekennzeichnet, dass** jeweils zwischen dem Axialanschlagflansch (6), dem Entarretiermittel (10) und dem Anschlagmittel (7) in jeweils zugeordneten Dichtrillen kreisringförmige Dichtringe (13) dichtend angeordnet sind.
